# FASCICULE DE BREVET EUROPEEN

(11) **EP 0 514 302 B1**
(45) Date de publication et mention de la délivrance du brevet: **27.03.1996**
(21) Numéro de dépôt: 92440054.2
(22) Date de dépôt: 07.05.1992
(51) Int. Cl.: A01D 78/10, A01B 73/04

(54) **Andaineuse de végétaux perfectionnée**
Verbesserter Pflanzenschwader
Improved crop windrower

(30) Priorité: 14.05.1991 FR 9105981
(43) Date de publication de la demande: 19.11.1992
(73) Titulaire: KUHN S.A., F-67700 Saverne (FR)
(72) Inventeur: Gantzer, Christian, F-57820 Dannelbourg (FR)
(74) Mandataire: Andres, Jean-Claude

(56) Documents cités:
- EP-A- 0 157 456
- EP-A- 0 296 666
- EP-A- 0 300 937
- EP-A- 0 406 140
- EP-A- 0 463 323
- EP-A- 0 498 192
- DE-U- 9 014 438
- GB-A- 1 034 126
- GB-A- 1 191 487
- GB-A- 2 095 525

## Description

La présente invention se rapporte à une machine agricole pour l'andainage latéral de végétaux couchés sur le sol, possédant une structure porteuse constituée d'au moins une poutre qui est dirigée dans la direction de déplacement de la machine et qui comporte, à l'une de ses extrémités, un dispositif d'accouplement et, à son autre extrémité, des supports divergents avec des roues qui se déplacent sur le sol, ladite structure possédant deux bras et portant chacun une roue râteleuse munie de bras porte-fourches et qui est entraînée en rotation au travail autour d'un axe support central, lesdits bras étant articulés par rapport à la poutre au moyen d'axes autour desquels ils peuvent être relevés et abaissés, ces bras s'étendant sensiblement perpendiculairement à ladite poutre, l'un se situant à droite et l'autre à gauche de celle-ci et l'un étant décalé par rapport à l'autre considéré dans la direction de déplacement.

La machine décrite dans le modèle d'utilité DE-U-90 14438 comporte une troisième roue râteleuse qui est disposée entre les deux roues râteleuses qui sont portées par les bras articulés sur la poutre de la structure porteuse. Cette troisième roue râteleuse se situe sous la poutre. Elle est articulée sur celle-ci au moyen d'un axe transversal. Pour la mise en position de transport, cette troisième roue râteleuse est soulevée et déplacée vers la poutre, mais elle reste sous cette dernière. De ce fait, la distance entre cette roue râteleuse et le sol reste faible. En conséquence, elle peut facilement toucher le sol et subir des dommages lorsque la machine est déplacée sur un terrain ou un chemin avec d'importantes dénivellations.

Par ailleurs, au début du relevage des deux roues râteleuses latérales au moyen de leurs bras, elles ne restent pas horizontales mais pivotent autour de leurs axes d'articulation avec lesdits bras et s'inclinent par rapport au sol. Les fourches qui sont en position de ratissage sont alors poussées dans le sol et peuvent se déformer voire se casser. Il en est de même lors du retour en position de travail lorsque les roues râteleuses arrivent près du sol.

Enfin, l'agencement des bras porteurs des roues râteleuses ne permet pas d'obtenir, en les relevant simplement jusque dans une position horizontale, un dégagement sous les roues râteleuses qui est suffisant pour pouvoir les faire passer par-dessus des andains déjà formés.

Sur une autre machine connue dans la demande de brevet EP-A-406 140, les deux roues râteleuses se situent sur une même ligne sensiblement perpendiculaire à la direction de déplacement et tournent en convergence à l'avant. Au travail, ces roues râteleuses confectionnent un andain unique qui est situé entre-elles. Cette machine ne permet donc pas de grouper deux andains en faisant uniquement un aller-retour. Or ceci est souhaitable lorsque la masse de végétaux n'est pas très importante, afin de réduire le nombre de passages avec les presses ou les ensileuses qui servent à ramasser lesdits végétaux.

La présente invention a notamment pour but de proposer une andaineuse ayant une grande largeur de travail et ne comportant pas les inconvénients précités des machines connues.

A cet effet, selon l'invention, dans la position de travail les deux roues râteleuses se situent partiellement sous la poutre de sorte que les trajectoires de leurs fourches respectives se recouvrent en partie, chacune de ces roues râteleuses est articulée sur son bras porteur au moyen d'un axe d'articulation qui se situe sensiblement dans un plan passant par son axe support central et la distance par rapport au sol des axes d'articulation des bras porteurs sur la poutre est égale à au moins le double de la distance entre les bras porte-fourches de chacune des roues râteleuses et le sol.

En raison de cet agencement, les végétaux râtelés par la première roue râteleuse sont intégralement repris par la deuxième roue râteleuse de sorte qu'elles forment ensemble un andain latéral.

Au début du relevage de ces roues râteleuses au moyen de leurs bras porteurs, elles sont sensiblement en équilibre. Ainsi leurs fourches ne sont pas poussées dans le sol. En sus, lorsque lesdits bras sont relevés dans une position sensiblement horizontale, la distance entre les roues râteleuses en équilibre et le sol est sensiblement égale à la hauteur d'un andain, ce qui permet de passer par-dessus un andain déjà formé, par exemple pour faire demi-tour.

Selon une autre caractéristique de l'invention, la poutre de la structure porteuse est réalisée en quatre parties assemblées de manière démontable. Elle comporte avantageusement deux parties centrales qui sont semblables. Il est ainsi possible d'inverser la position de ces deux parties centrales en vue de modifier la position des roues râteleuses par rapport au sens d'avancement. Ceci permet par exemple d'utiliser les mêmes pièces pour réaliser des structures porteuses pour des machines qui forment l'andain sur le côté gauche de la poutre, ainsi que des machines qui forment l'andain sur le côté droit.

D'autres caractéristiques et avantages de l'invention ressortiront des revendications et de la description ci-après d'un exemple de réalisation non limitatif de l'invention, avec référence aux dessins annexés dans lesquels :
- La figure 1 représente une vue de dessus d'une machine selon l'invention dans la position de travail ;
- La figure 2 représente, à plus grande échelle, une vue arrière d'une partie de la machine de la figure 1 ;
- La figure 3 représente une vue similaire à celle de la figure 2, la roue râteleuse étant partiellement levée ;
- La figure 4 représente une vue arrière d'une partie de la machine, dans la position de transport.

Telle qu'elle est représentée sur les figures annexées, la machine selon l'invention comporte une structure porteuse (1). Celle-ci est notamment constituée par une poutre (2) qui est dirigée dans la direction de déplacement (D). Cette poutre (2) possède à son extrémité avant un dispositif d'accouplement (3) pour l'accrocher à un tracteur d'entraînement qui n'est pas représenté. A son extrémité arrière, elle possède deux supports (4, 5) divergents, ayant chacun une roue porteuse (6, 7) qui repose sur le sol. Ladite structure possède en sus deux bras (8, 9) portant chacun une roue râteleuse (10, 11). Lesdits bras (8, 9) sont articulés sur la poutre (2) au moyen d'axes (12, 13) dirigés dans la direction de déplacement (D). Ils s'étendent sensiblement perpendiculairement à la poutre (2), l'un à droite et l'autre à gauche de cette dernière. Chacun se compose de deux longerons (14, 15) parallèles qui sont reliés entre eux par une traverse (16).

Les deux roues râteleuses (10 et 11) sont sensiblement identiques. Chacune comporte un carter (17) dans lequel est fixé un axe support central (18). Celui-ci porte, à son extrémité la plus éloignée du carter (17), une traverse (19) avec deux roulettes (20, 21) qui sont dirigées dans la direction de déplacement (D). Entre la traverse (19) et ledit carter (17) de chaque roue râteleuse (10, 11) est prévu un boîtier (22) avec des bras (23) équipés d'outils de travail (24) tels que des dents. Ce boîtier (22) est monté sur l'axe support (18), de manière à pouvoir tourner autour. Les bras porte-outils (23) sont guidés dans des paliers (25) qui sont rendus solidaires du boîtier (22), de sorte qu'ils puissent pivoter autour de leurs axes géométriques longitudinaux respectifs. A l'intérieur de ce boîtier (22) est prévue, d'une manière connue, une came de commande qui est fixée sur l'axe support (18). Chaque bras porte-outils (23) comporte à son extrémité située dans le boîtier (22) un levier avec un galet qui est guidé dans ladite came. Des roues râteleuses avec des outils de travail non commandés par une came pourraient également équiper la machine selon l'invention.

Dans le carter (17) de chaque roue râteleuse (10, 11) sont prévus des moyens mécaniques pour entraîner le boîtier (22) en rotation autour de l'axe support (18). Ces moyens sont constitués par une couronne dentée qui est rendue solidaire de la partie supérieure du boîtier (22) et un pignon d'entraînement qui engrène avec ladite couronne. Ce pignon est lié à un arbre (26) qui s'étend hors du carter (17), en direction de la poutre (2). Cet arbre peut être relié à travers divers arbres de transmission à l'arbre de prise de force du tracteur.

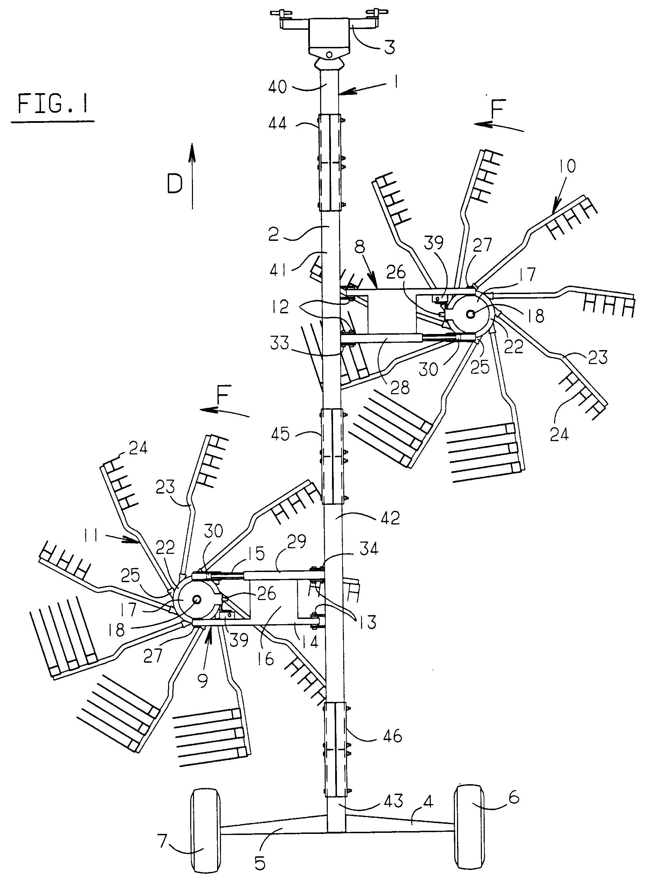

On voit sur la figure 1 que les deux bras (8, 9) qui portent les roues râteleuses (10, 11) sont décalés l'un par rapport à l'autre, considéré dans la direction de déplacement (D). Dans la position de travail représentée, les deux roues râteleuses (10, 11) se situent partiellement sous la poutre (2), de sorte que les trajectoires de leurs outils (24) respectifs se recouvrent en partie.

Chaque roue râteleuse (10, 11) est articulée sur son bras porteur (8, 9) au moyen d'un axe d'articulation (27) sensiblement horizontal et dirigé dans la direction de déplacement (D). Cet axe (27) se situe pratiquement dans un plan qui passe par l'axe support central (18) de la roue râteleuse (10, 11) correspondante, de sorte que celle-ci soit sensiblement en équilibre lorsqu'elle est soulevée au moyen du bras porteur (8, 9).

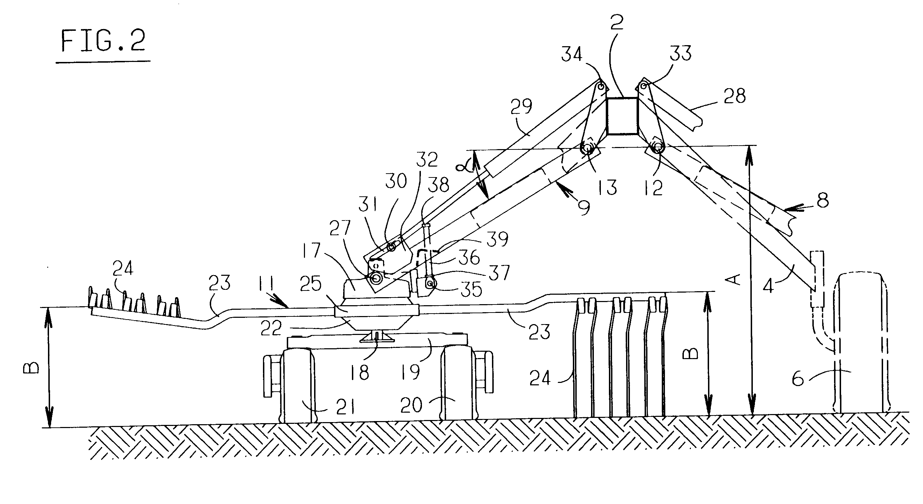

On voit notamment sur la figure 2 que dans la position de travail, chaque bras porteur (8, 9) d'une roue râteleuse (10 ou 11) forme un angle α avec l'horizontale dont la valeur est d'environ 30°. Cette valeur est de préférence comprise entre 20° et 40°. Par ailleurs, la distance (A) de l'axe d'articulation (12, 13) de chaque bras porteur (8, 9) sur la poutre (2), par rapport au sol est égale à au moins le double de la distance (B) entre les bras porte-fourches (23) des roues râteleuses (10, 11) et le sol. La poutre (2) se situe elle-même à une distance du sol qui est supérieure à la distance (A) précitée.

Chaque bras porteur (8, 9) d'une roue râteleuse (10, 11) est en sus relié à la poutre (2) au moyen d'un vérin hydraulique (28, 29). L'extrémité de chaque vérin (28, 29) qui est liée au bras porteur (8, 9) comporte un tenon (30) qui est guidé dans un orifice oblong (31) de deux plaques (32) qui sont solidaires dudit bras (8, 9). L'autre extrémité de chaque vérin (28, 29) est articulée sur la poutre (2) par l'intermédiaire d'un axe (33, 34) qui est parallèle à l'axe d'articulation (12, 13) du bras porteur (8, 9) correspondant.

Sur le carter (17) de chaque roue râteleuse (10, 11) est articulée, au moyen d'un tourillon (35) qui est parallèle à son axe d'articulation (27) sur le bras porteur (8, 9) correspondant, une tige (36) munie de deux arrêts (37 et 38). Cette tige (36) est engagée dans un orifice d'un guide (39) qui est solidaire du bras porteur (8, 9) correspondant. Ce guide (39) se situe entre les deux arrêts (37 et 38).

Chacun desdits bras porteurs (8, 9) peut être réalisé en deux longerons télescopiques. Ils peuvent ainsi être allongés ou raccourcis en fonction du volume des produits à andainer.

La poutre (2) de la structure porteuse (1) est réalisée en quatre parties (40, 41, 42, 43). Celles-ci sont assemblées de manière démontable au moyen de brides (44, 45, 46). Ces caractéristiques permettent de ne réaliser l'assemblage de la poutre (2) qu'au moment de la livraison à l'utilisateur. Ces différentes pièces sont ainsi plus faciles à transporter. Par ailleurs, les deux parties centrales (41 et 42) de la poutre (2) sont semblables. La position de ces deux parties centrales (41, 42) peut ainsi être inversée, c'est-à-dire la partie (42) peut être placée devant la partie (41). De cette façon, il est possible de monter les roues râteleuses de telle sorte que celle qui est du côté gauche de la poutre (2) soit plus en avant que celle qui est du côté droit (position inverse de celle représentée sur la figure 1). Avec des roues râteleuses qui tournent dans le sens des aiguilles d'une montre, une telle machine peut déposer un andain latéral sur le côté droit de la machine. La même structure porteuse (1) peut ainsi être utilisée pour des machines différentes.

Durant le travail, la machine représentée sur la figure 1 est attelée à un tracteur qui la déplace dans le sens de la flèche (D). Les deux bras porteurs (8, 9) sont alors abaissés de telle sorte qu'ils forment les angles α précités avec l'horizontale (figure 2). Les roulettes (20, 21) se déplacent sur le sol et font suivre les dénivellations aux roues râteleuses (10 et 11). Ces dernières peuvent se déplacer en hauteur avec leurs bras porteurs (8, 9), par rapport aux vérins hydrauliques (28, 29), dans les limites autorisées par les orifices oblongs (31). Les pivotements des roues râteleuses (10 et 11) autour des axes d'articulation (27) avec les bras porteurs (8, 9) eux-mêmes, sont contrôlés au moyen des arrêts (37 et 38) et des guides (39).

Les boîtiers (22) des deux roues râteleuses (10 et 11) sont entraînés en rotation dans le même sens (flèches F) à partir du tracteur. La roue râteleuse (10) qui est la plus avancée tourne sur sa moitié avant vers la roue râteleuse arrière (11). Durant cette rotation, les bras porte-outils (23) de chaque roue râteleuse (10, 11) sont commandés, par la came correspondante, de telle sorte que leurs outils (24) râtellent les produits sur la partie avant de leur trajectoire et ensuite les déposent latéralement sous la forme d'un andain. Grâce au recouvrement des trajectoires de leurs outils (24), les produits déposés par la roue râteleuse (10) la plus en avant sont intégralement repris par la roue râteleuse (11) qui est la plus en arrière. Celle-ci assure alors la formation d'un andain latéral avec la totalité des produits râtelés à chaque passage.

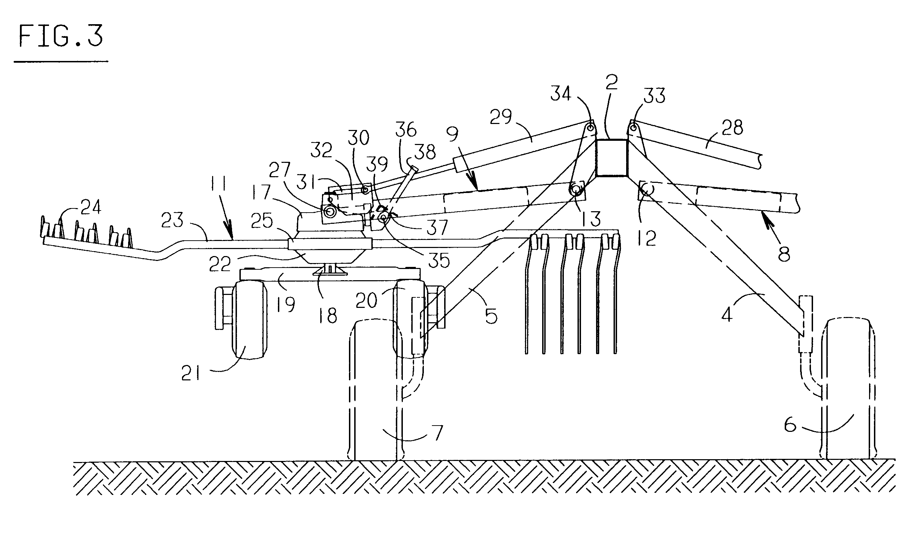

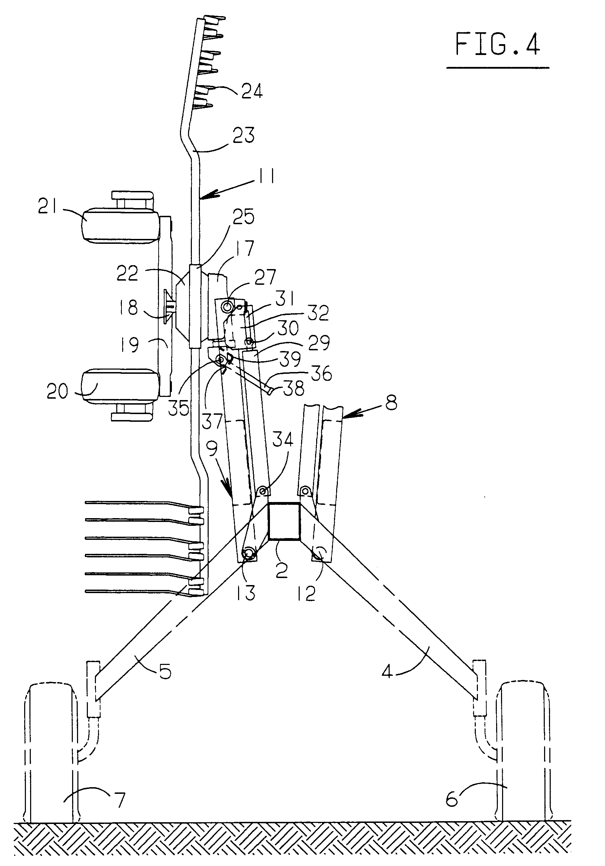

Pour le transport, les deux roues râteleuses (10, 11) sont amenées dans une position sensiblement verticale (figure 4). Pour cela, les vérins hydrauliques (28, 29) sont commandés afin qu'ils se rétractent. Les bras porteurs (8, 9) pivotent alors vers le haut autour des axes d'articulation (12, 13). Au début de ce pivotement, c'est-à-dire jusqu'à ce qu'ils arrivent dans la position sensiblement horizontale (figure 3), ils déplacent les roues râteleuses (10, 11) vers l'extérieur et vers le haut. Durant ce déplacement, ces dernières restent horizontales et s'éloignent du milieu de la machine. Lorsque les bras porteurs (8, 9) sont sensiblement horizontaux, la distance entre les roues râteleuses (10, 11) et le sol est pratiquement égale à la hauteur d'un andain. Il est ainsi possible, par exemple pour faire demi-tour, de faire passer les roues râteleuses (10, 11) par-dessus un andain déjà formé sans le défaire. Après avoir passé la position horizontale, les bras porteurs (8, 9) se rapprochent progressivement de la position verticale. Les roues râteleuses (10, 11) se placent également dans une position verticale et se rapprochent de la poutre (2), afin de réduire la largeur de la machine. Les arrêts (37) buttent alors contre les guides (39) et immobilisent lesdites roues râteleuses par rapport aux bras porteurs (8, 9).

Inversement, pour revenir dans la position de travail, les vérins hydrauliques (28 et 29) sont actionnés pour qu'ils s'allongent. Les roues râteleuses (10, 11) reviennent alors automatiquement dans la position horizontale et pivotent vers le bas jusqu'à ce que les roulettes (20, 21) soient en contact avec le sol.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel que défini dans les revendications.

## Revendications

1. Machine agricole pour l'andainage latéral de végétaux couchés sur le sol, possédant une structure porteuse (1) constituée d'au moins une poutre (2) qui est dirigée dans la direction de déplacement (D) de la machine et qui comporte, à l'une de ses extrémités, un dispositif d'accouplement (3) et, à son autre extrémité, des supports (4, 5) divergents avec des roues (6, 7) qui se déplacent sur le sol, ladite structure possédant deux bras (8, 9) portant chacun une roue râteleuse (10, 11) munie de bras porte-fourches (23) et qui est entraînée en rotation au travail autour d'un axe support central (18), lesdits bras (8, 9) étant articulés par rapport à la poutre (2) au moyen d'axes (12, 13) autour desquels ils peuvent être relevés et abaissés, ces bras (8, 9) s'étendant sensiblement perpendiculairement à ladite poutre (2), l'un se situant à droite et l'autre à gauche de celle-ci et l'un étant décalé par rapport à l'autre considéré dans la direction de déplacement (D), caractérisée par le fait que dans la position de travail les deux roues râteleuses (10, 11) se situent partiellement sous la poutre (2) de sorte que les trajectoires de leurs fourches respectives se recouvrent en partie, que chacune de ces roues râteleuses (10, 11) est articulée sur son bras porteur (8, 9) au moyen d'un axe d'articulation (27) qui se situe sensiblement dans un plan passant par son axe support central (18) et que la distance (A) par rapport au sol des axes d'articulation (12, 13) des bras (8, 9) sur la poutre (2) est égale à au moins le double de la distance (B) entre les bras porte-fourches (23) de chacune des roues râteleuses (10, 11) et le sol.

2. Machine selon la revendication 1, caractérisée par le fait que dans la position de travail, chaque bras porteur (8, 9) d'une roue râteleuse (10, 11) forme un angle (α) avec l'horizontale dont la valeur est comprise entre 20° et 40°.

3. Machine selon la revendication 1 ou 2, caractérisée par le fait qu'entre la poutre (2) et chaque bras porteur (8, 9) d'une roue râteleuse (10, 11) est prévu un vérin hydraulique (28, 29) dont l'extrémité qui est reliée audit bras porteur (8, 9) est guidée dans un orifice oblong (31).

4. Machine selon l'une quelconque des revendications précédentes, caractérisée par le fait que chaque bras porteur (8, 9) d'une roue râteleuse (10, 11) est télescopique.

5. Machine selon l'une quelconque des revendications précédentes, caractérisée par le fait que la poutre (2) de la structure porteuse (1) est réalisée en quatre parties (40 à 43) assemblées de manière démontable au moyen de brides (44, 45, 46).

6. Machine selon la revendication 5, caractérisée par le fait que les deux parties centrales (41, 42) de la poutre porteuse (2) sont semblables.

7. Machine selon l'une quelconque des revendications 1 à 4, caractérisée par le fait que sur chaque roue râteleuse (10, 11) est articulée une tige (36) qui comporte deux arrêts (37, 38) et qui est engagée dans un guide (39) qui est solidaire du bras porteur (8, 9) correspondant.

## Claims

1. Agricultural machine for the lateral swathing of plants lying on the soil, having a carrying structure (1) made up of at least one beam (2) which is directed in the direction of displacement (D) of the machine and which comprises, at one of its ends, a coupling device (3) and at its other end, diverging supports (4, 5) with wheels (6, 7) which displace on the soil, the said structure having two arms (8, 9) carrying each one raking wheel (10, 11) provided with fork-carrying arms (23) and which is driven in rotation during work about a central support axis (18), the said arms (8, 9) being articulated with regard to the beam (2) by means of axes (12, 13) about which they can be raised and lowered, these arms (8, 9) extending approximately perpendicularly to the said beam (2), one being located at the right and the other at the left of this latter and one being shifted with regard to the other seen in the direction of displacement (D), ***characterised in that*** in the working position the two raking wheels (10, 11) are partly located under the beam (2) so that the trajectories of their respective forks partly overlap, that each of these raking wheels (10, 11) is articulated on its carrying arm (8, 9) by means of an axis of articulation (27) which is located approximately in a plane passing through its central support axis (18) and that the distance (A) with regard to the soil of the axes of articulation (12, 13) of the arms (8, 9) on the beam (2) is equal to at least twice the distance (B) between the fork-carrying arms (23) of each of the raking wheels (10, 11) and the soil.

2. Machine in accordance with claim 1, ***characterised in that*** in the working position, each carrying arm (8, 9) of a raking wheel (10, 11) forms an angle (α) with the horizontal which value is comprised between 20° and 40°.

3. Machine in accordance with claim 1 or 2, ***characterised in that*** between the beam (2) and each carrying arm (8, 9) of a raking wheel (10, 11) is provided a hydraulic jack (28, 29), the end of which is connected to the said carrying arm (8, 9) and is guided in an oblong opening (31).

4. Machine in accordance with any one of the preceding claims, ***characterised in that*** each carrying arm (8, 9) of a raking wheel (10, 11) is telescopic.

5. Machine in accordance with any one of the preceding claims, ***characterised in that*** the beam (2) of the carrying structure (1) is achieved in four parts (40 to 43) assembled according to a dismountable manner by means of clamps (44, 45, 46).

6. Machine in accordance with claim 5, ***characterised in that*** the two central parts (41, 42) of the beam (2) are similar.

7. Machine in accordance with any one of claims 1 to 4, ***characterised in that*** on each raking wheel (10, 11) is articulated a rod (36) which comprises two stops (37, 38) and which is engaged in a guide (39) which is solidly fastened to the corresponding carrying arm (8, 9).

## Patentansprüche

1. Landmaschine zum seitlichen Schwaden von auf dem Boden liegenden Pflanzen, die ein aus mindestens einem Träger (2) bestehendes Traggestell (1) aufweist, wobei der Träger (2) in Fortbewegungsrichtung (D) der Maschine ausgerichtet ist und an einem seiner Enden eine Kupplungsvorrichtung (3) und an seinem anderen Ende auseinandergehende Stutzen (4, 5) mit auf dem Boden laufenden Rädern (6, 7) enthält, und wobei jenes Traggestell zwei Arme (8, 9) aufweist, die jeweils ein mit Gabein tragenden Armen (23) versehenes Rechrad (10, 11) tragen, das bei der Arbeit zur Drehung um eine mittlere Stützachse (18) angetrieben wird, wobei die Arme (8, 9) bezüglich des Trägers (2) mittels Achsen (12, 13) gelenkig angebracht sind, um die sie angehoben und abgesenkt werden können, wobei sich diese Arme (8, 9) im wesentlichen senkrecht zum Träger (2) erstrecken und sich einer rechts und der andere links davon befindet und einer gegenüber dem anderen in Fortbewegungsrichtung (D) gesehen versetzt ist, ***dadurch gekennzeichnet, daß*** sich die beiden Rechräder (10, 11) in der Arbeitsstellung teilweise so unter dem Träger (2) befinden, daß sich die Bahnen ihrer jeweiligen Gabeln teilweise überlappen, daß jedes dieser Rechräder (10, 11) an seinem Tragarm (8, 9) mittels einer Gelenkachse (27), die sich im wesentlichen in einer durch seine mittlere Stützachse (18) laufenden Ebene befindet, gelenkig angebracht ist und daß der Abstand (A) der Gelenkachsen (12, 13) der Arme (8, 9) am Träger (2) vom Boden mindestens das Doppelte des Abstands (B) zwischen den Gabeln tragenden Armen (23) jedes Rechrads (10, 11) und dem Boden beträgt.

2. Maschine nach Anspruch 1, ***dadurch gekennzeichnet, daß*** jeder Tragarm (8, 9) eines Rechrads (10, 11) in der Arbeitsstellung zur Horizontalen einen Winkel (α) dessen Wert zwischen 20° und 40° liegt, bildet.

3. Maschine nach Anspruch 1 oder 2, ***dadurch gekennzeichnet, daß*** zwischen dem Träger (2) und jedem Tragarm (8, 9) eines Rechrads (10, 11) ein Hydraulikzylinder (28, 29) vorgesehen ist, dessen mit dem Tragarm (8, 9) verbundenes Ende in einer länglichen Öffnung (31) geführt wird.

4. Maschine nach irgend einem der vorhergehenden Ansprüche, ***dadurch gekennzeichnet, daß*** jeder Tragarm (8, 9) eines Rechrads (10, 11) teleskopisch ist.

5. Maschine nach irgend einem der vorhergehenden Ansprüche, ***dadurch gekennzeichnet, da*****ß** der Träger (2) des Traggestells (1) in vier Teilen (40 bis 43) ausgebildet ist, die mittels Laschen (44, 45, 46) lösbar aneinandergefügt sind.

6. Maschine nach Anspruch 5, ***dadurch gekennzeichnet, daß*** die beiden mittleren Teile (41, 42) des Trägers (2) gleichartig sind.

7. Maschine nach irgend einem der Ansprüche 1 bis 4, ***dadurch gekennzeichnet, daß*** an jedem Rechrad (10, 11) ein Schaft (36) gelenkig angebracht ist, der zwei Anschläge (37, 38) aufweist und in eine Führung (39) eingreift, die mit dem entsprechenden Tragarm (8, 9) fest verbunden ist.
